(19) Europäisches Patentamt
European Patent Office
Office européen des brevets

(11) EP 1 034 645 B1

(12) # FASCICULE DE BREVET EUROPEEN

(45) Date de publication et mention de la délivrance du brevet:
**27.11.2002 Bulletin 2002/48**

(21) Numéro de dépôt: **98943972.4**

(22) Date de dépôt: **11.09.1998**

(51) Int Cl.^7: **H04L 27/26**

(86) Numéro de dépôt international:
**PCT/FR98/01953**

(87) Numéro de publication internationale:
**WO 99/013623 (18.03.1999 Gazette 1999/11)**

(54) **PROCEDE D'ESTIMATION D'UN DECALAGE DE PHASE PARASITE LORS DE LA RECEPTION D'UN SIGNAL MULTIPORTEUR, ET RECEPTEUR CORRESPONDANT**

VERFAHREN ZUR SCHÄTZUNG DER STÖRPHASENVERSCHIEBUNG BEIM EMPFANG VON MEHRTRÄGERSIGNALEN UND ZUGEHÖRIGER EMPFÄNGER

METHOD FOR ESTIMATING AN INTERFERENCE PHASE SHIFT WHEN RECEIVING A MULTICARRIER SIGNAL AND CORRESPONDING RECEIVER

(84) Etats contractants désignés:
**DE ES GB IT SE**

(30) Priorité: **11.09.1997 FR 9711526**

(43) Date de publication de la demande:
**13.09.2000 Bulletin 2000/37**

(73) Titulaires:
- **FRANCE TELECOM**
**75015 Paris (FR)**
- **TELEDIFFUSION DE FRANCE**
**75732 Paris Cédex 15 (FR)**

(72) Inventeurs:
- **COMBELLES, Pierre**
**F-35000 Rennes (FR)**
- **SUEUR, Bertrand**
**F-35135 Chantepie (FR)**
- **LACROIX, Dominique**
**F-35000 Rennes (FR)**

(74) Mandataire: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
**EP-A- 0 631 406**
**EP-A- 0 785 645**
**WO-A-96/00472**
**EP-A- 0 762 702**
**WO-A-95/20848**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 034 645 B1

Printed by Jouve, 75001 PARIS (FR)

## Description

Le domaine de l'invention est celui de la réception de signaux multiporteuses. Plus précisément, l'invention concerne l'estimation du décalage de phase introduit par les opérations de démodulation.

L'invention s'applique à tous les types de signaux mettant en oeuvre une pluralité de fréquences porteuses, c'est-à-dire aux systèmes mettant en oeuvre des signaux transmis selon la technique de multiplexage par répartition en fréquence (en anglais : Frequency Division Multiplex (FDM)), et par exemple le système COFDM (Coded Orthogonal Frequency Division Multiplex (multiplexage de fréquences orthogonales codées)), mis en oeuvre notamment dans le cadre des projets européens Eurêka 147 "DAB" (Digital Audio Broadcasting (diffusion audionumérique)), et RACE dTTb (digital Terrestrial TV broadcasting (diffusion numérique de signaux de télévision terrestre)).

Dans de tels systèmes de transmission, les données source à transmettre sont organisées en symboles (constitués d'une ou plusieurs données source) modulant chacun, pendant un intervalle de temps prédéterminé, une fréquence porteuse choisie parmi une pluralité de porteuses. Le signal formé par l'ensemble des porteuses modulées est transmis vers un ou plusieurs récepteurs, qui reçoivent un signal émis pertubé par le canal de transmission.

La démodulation consiste généralement, dans son principe, à estimer la réponse du canal de transmission pour chaque porteuse et chaque symbole, puis à diviser le signal reçu par cette estimation pour obtenir une estimation du symbole émis.

On connaît de nombreuses techniques de démodulation, qui peut être différentielle ou cohérente. Une technique facilitant la démodulation cohérente à l'aide de symboles de référence (ou "pilotes") connus des récepteurs et régulièrement insérés parmi les symboles utiles est par exemple décrite dans le brevet FR-94 07984 au nom des mêmes déposants.

Le signal numérique multiporteuse considéré inclut donc un certain nombre de "pilotes", c'est-à-dire des porteuses modulées par de valeurs connues du récepteur. Soit C l'ensemble des indices de ces porteuses. Pour k appartenant à C, on note $P_{n,k}$ la valeur complexe modulant la porteuse numéro k pendant la durée symbole numéro n. On rappelle que cette valeur est connue du récepteur.

En réception, on note $R_{n,k}$ la valeur observée sur le $n^{ième}$ symbole de la porteuse numéro k. Typiquement :

$$R_{n,k} = P_{n,k}\ H_{n,k}\ e^{j\phi_n}\ (+\ \text{bruit}) \qquad (1)$$

où

- $H_{n,k}$ est la réponse fréquentielle complexe du canal à la fréquence de la porteuse numéro k ;
- $\phi_n$ est une phase introduite par la démodulation et que l'on cherche à estimer ($\phi_n$ est commune à toutes les porteuses).

$H_{n,k}$ varie lentement dans le temps ($H_{n,k}$ peu différent de $H_{n+1,k}$), alors que $\phi_n$ peut varier considérablement d'un symbole au suivant si l'oscillateur local du récepteur est mal réglé. Estimer $\phi_n$ sert donc par exemple à connaître l'erreur de fréquence de l'oscillateur local afin de la corriger ensuite (Contrôle Automatique de Fréquence, ou CAF).

En outre, comme décrit dans les documents de brevet français FR-95 10067 et FR-95 10068, au nom des mêmes déposants que la présente demande de brevet, la connaissance de $\phi_n$ permet de diminuer le biais introduit par une distorsion blanche en fréquence, et de tenir compte d'une estimation d'une telle distorsion blanche pour la démodulation.

En pratique, seules les variations de $\phi_n$ sont à estimer : la valeur de $\phi_o$, fixe par définition, peut être "incorporée" dans la réponse du canal $H_{n,k}$. Comme $H_{n,k}$ est peu différent de $H_{n+1,k}$, ($\phi_n$-$\phi_{n-1}$) noté $\delta_n$ est classiquement estimé à partir des $R_{n,k}$ suivant la formule :

$$\delta_n = \operatorname{Arg}\left\{\sum_{k\in C}\left[(R_{n,k}.P^*_{n,k})(R_{n-1,k}.P^*_{n-1,k})^*\right]\right\} \qquad (2)$$

Cette approche connue s'explique de la façon suivante. Notons $A_{n,k}$ le module carré de $H_{n,k}$ et $Q_{n,k}$ le module carré de $P_{n,k}$. D'après l'équation (1), $R_{n,k}P^*_{n,k}$ donne une estimation de $Q_{n,k}H_{n,k}e^{j\phi n}$. De même, $R_{n-1,k}P^*_{n-1,k}$ donne une estimation de $Q_{n-1,k}H_{n-1,k}e^{j\phi n-1}$. Enfin, $H_{n,k}$ étant peu différent de$H_{n-1,k,}$ $H_{n,k}H^*_{n-1,k}$ est proche de $A_{n,k}$. On a donc :

$$\delta_n \simeq \mathrm{Arg}\left\{\sum_{k \in C}\left[Q_{n,k}Q_{n-1,k}A_{n,k}e^{j(\phi_n - \phi_{n-1})}\right]\right\}$$

La pondération des termes de la somme par $Q_{n,k}.Q_{n-1,k}.A_{n,k}$ est bénéfique car elle reflète la fiabilité de chaque terme (plus l'amplitude est grande, plus la phase est fiable). Ce type d'estimation est donc particulièrement bien adapté aux canaux sélectifs en fréquence, pour lesquels $A_{n,k}$ varie beaucoup avec k.

Finalement, la phase $\delta_n$ de la somme donne une estimation de $(\phi_n-\phi_{n-1})$ dont la fiabilité augmente avec le nombre de porteuses de C.

En pratique, les $P_{n,k}$ ont généralement le même module Q. $P_{n,k}$ peut même être complètement indépendant de n (porteuses continues) : dans ce cas, la somme (2) peut être simplifiée car $P^*_{n,k}P_{n-1,k}$ est toujours égale à Q, de la façon suivante :

$$\delta_n = \mathrm{Arg}\left\{\sum_{k \in C}\left[R_{n,k}.R_{n-1,k}.P^*_{n-1,k}\right]\right\} \qquad \text{(2bis)}$$

Dans la suite, on gardera la forme de l'équation (2) pour ne pas perdre en généralité, mais la forme (2bis) est évidemment à préférer dans le cas de porteuses continues.

Dans certains cas, on cherche à estimer non pas $(\phi_n-\phi_{n-1})$ mais $(\phi_n-\phi_{n-t})$, t>1 ; la méthode reste bien sûr la même. Il suffit de remplacer l'indice n-1 par n-t.

Les inventeurs ont observés que, si cette technique classique est efficace en condition de transmission peu brouillée, elle s'avère déficiente dans certaines conditions, en présence de brouilleurs. En effet, dans ce cas, certaines porteuses sont polluées en permanence par un bruit très fort, parfois nettement plus fort que le signal utile. Dans la somme (2), cela se traduit par quelques termes complètement faux, généralement dotés d'une forte amplitude. Comme $\delta_n$ est assez petit (surtout lorsque l'oscillateur local tend vers la bonne fréquence), ces quelques termes sont susceptibles de perturber complètement le résultat de la somme.

On connaît également, par le document WO-95/20848, une technique consistant à estimer une erreur de phase en effectuant une analyse tenant compte de l'ensemble des porteuses formant le signal reçu. Il ne prévoit pas l'utilisation de porteuses de référence.

L'invention a notamment pour objectif de pallier cet inconvénient de l'état de l'art.

Plus précisément, un objectif de l'invention est de fournir une technique permettant d'atténuer fortement l'effet des brouilleurs sur l'estimation du décalage de phase induit par le récepteur.

En d'autres termes, l'invention a pour objectif de fournir un procédé, et un récepteur correspondant, qui optimise l'estimation du décalage de phase, notamment lorsque ce dernier est faible.

Un autre objectif de l'invention est de fournir une telle technique, qui soit simple à mettre en oeuvre, et qui ne nécessite pas des calculs complexes, ni de moyens spécifiques dans les récepteurs.

L'invention a encore pour objectif de fournir une telle technique, qui ne nécessite pas de modification du signal à émettre, et qui soit donc compatible avec les techniques d'émission déjà mises en oeuvre.

Ces objectifs, ainsi que d'autres qui apparaîtront par la suite, sont atteints selon l'invention à l'aide d'un procédé (selon la revendication 1) d'estimation d'un décalage de phase parasite lors de la réception d'un signal multiporteuse formé d'une succession temporelle de symboles modulant une pluralité de fréquences porteuses, au moins certaines desdites fréquences porteuses d'au moins certains desdits symboles portant des éléments de référence, dont la valeur à l'émission est connue du récepteur effectuant ladite réception selon la revendication 8, procédé du type comprenant une étape d'estimation de la variation de phase $\delta_n$ entre au moins deux symboles portant des éléments de référence, selon lequel la contribution d'au moins certains desdits éléments de référence dans ladite estimation est pondérée par une information représentative du bruit affectant la fréquence porteuse portant ledit élément de référence.

Ainsi l'importance attribuée à chaque pilote est fonction des perturbations qui l'affectent, et donc de sa crédibilité. Il est à noter que cette approche nouvelle n'est pas évidente, mais repose notamment sur la formulation du problème exposé plus haut, qui n'avait jamais été faite ou envisagée.

On rappelle que d'une façon générale, le décalage de phase est induit notamment, mais non exclusivement, par le récepteur.

Ladite information représentative du bruit peut notamment appartenir au groupe comprenant :

- la variance du bruit affectant chaque fréquence porteuse $(\sigma^2_k)$ ;

- l'amplitude du produit $R_{n,k}.R^*_{n-i,k}$ ;
- le taux d'erreur affectant chaque fréquence porteuse ;
- une information indiquant que la porteuse n'est pas fiable.

Ces informations, et notamment la variance du bruit, sont souvent déjà calculées pour d'autres applications, et notamment le calcul du rapport signal à bruit (S/B) sur chaque porteuse pour optimiser le décodage de Viterbi à entrées pondérées ("soft decoding").

Les calculs à effectuer sont donc très réduits. Il s'agit simplement de pondérer les calculs habituels en fonction d'une information disponible.

Ainsi, dans le cas d'une estimation de de la variance, l'estimation de la variation de phase $\delta_n$ est avantageusement calculée de la façon suivante :

$$\delta_n = \operatorname{Arg}\left\{\sum_{k \in C}\left[\frac{1}{\sigma_k^2}(R_{n,k}.P^*_{n,k})(R_{n-1,k}.P^*_{n-1,k})^*\right]\right\} \qquad (3)$$

où :

- $P_{n,k}$ est la valeur de l'élément de référence tel qu'émis ;
- $R_{n,k}$ est la valeur de l'élément de référence tel que reçu ;
- n représente la dimension temporelle ;
- k représente la dimension fréquentielle ;
- C étant l'ensemble des fréquences porteuses portant des éléments de référence.

Lorsque le récepteur calcule une estimation de $\rho_{n,k} = A_{n,k}/\sigma^2_k$, $\sigma^2_k$ étant une estimation de la variance du bruit et $A_{n,k}$ étant une estimation du module carré de la réponse fréquentielle du canal sur la fréquence porteuse k à l'instant n, l'estimation de la variation de phase $\delta_n$ est par exemple calculée de la façon suivante :

$$\delta_n = \operatorname{Arg}\left\{\sum_{k \in C}\left[\rho_{n,k}(R_{n,k}.P^*_{n,k})(R_{n-1,k}.P^*_{n-1,k})^*\right]\right\} \qquad (4)$$

Selon un mode de réalisation avantageux de l'invention, ladite pondération consiste simplement en un seuillage, seuls les éléments de référence portés par des fréquences porteuses pour lesquelles ladite information représentative du bruit dépasse un seuil prédéterminé étant prises en compte.

On vérifie en effet que cette solution, plus expéditive mais plus simple, est suffisante dans la plupart des cas.

Dans ce cas, si ladite information représentative du bruit est une estimation de la variance du bruit, l'estimation de la variation de phase $\delta_n$ peut être calculée de la façon suivante:

$$\delta_n = \operatorname{Arg}\left\{\sum_{k \in C}\left[I(\sigma_k)(R_{n,k}.P^*_{n,k})(R_{n-1,k}.P^*_{n-1,k})^*\right]\right\} \qquad (5)$$

où :

- $I(\sigma_k)$ vaut 1 tant que $\sigma_k$ est en dessous dudit seuil, et 0 sinon.

Si ladite information représentative du bruit est une estimation de $\rho_{n,k} = A_{n,k}/\sigma^2_k$, l'estimation de la variation de phase $\delta_n$ est avantageusement calculée de la façon suivante :

$$\delta_n = \operatorname{Arg}\left\{\sum_{k \in C}\left[J(\rho_{n,k})(R_{n,k}.P^*_{n,k})(R_{n-1,k}.P^*_{n-1,k})^*\right]\right\} \qquad (6)$$

où :

$J(\rho_{n,k})$ vaut 1 tant que $\rho_k$ est au dessus dudit seuil, et 0 sinon.

L'invention concerne également les récepteurs mettant en oeuvre un tel procédé. Ces récepteurs comprennent des moyens d'estimation pondérant la contribution de chacun desdits éléments de référence dans ladite estimation par une information représentative du bruit affectant la fréquence porteuse portant ledit élément de référence.

Préférentiellement, ladite information représentative du bruit est une estimation de la variance du bruit affectant chaque fréquence porteuse ($\sigma^2_k$).

D'autres caractéristiques et avantages de l'invention apparaîtront à la lecture de la description suivante d'un mode de réalisation préférentiel de l'invention, donné à titre de simple exemple illustratif et non limitatif de la figure unique, illustant de façon schématique le procédé de l'invention.

Comme indiqué en préambule, l'invention s'applique à la réception des signaux multiporteuses, et concerne plus précisément l'estimation d'un décalage de phase induit principalement (mais non exclusivement) par le récepteur.

Le procédé de l'invention peut être par exemple être mis en oeuvre pour optimiser la précision du décalage de phase pris en compte dans les documents de brevet français FR-95 10067 et FR-95 10068, au nom des mêmes déposants que la présente demande de brevet.

L'invention permet également, très simplement, d'améliorer l'estimation du décalage de phase entre deux symboles consécutifs ou non, par exemple pour agir sur la commande automatique de fréquence (CAF).

La figure unique illustre le principe de l'invention.

Le signal transmis au travers du canal de transmission est classiquement reçu par des moyens de réception 1 qui effectuent les opérations classiques permettant de retrouver les différentes porteuses émises (amplification, filtrage, FFT...). Toujours classiquement, ont extrait (2) du signal reçu les pilotes reçus $R_{n,k}$.

Ces valeurs $R_{n,k}$ alimentent le module 3 de calcul de l'estimation du décalage de phase, qui reçoit également, d'une mémoire interne 4, les valeurs connues $P_{r,k}$ des pilotes.

Par ailleurs, selon l'invention, le module d'estimation 3 reçoit le calcul de la variance $\sigma^2_k$, de moyens 5 de calcul de la variance du bruit, destinée également à d'autres applications classiques. Plusieurs techniques classiques sont connues pour calculer $\sigma^2_k$.

Dans une variante de l'invention, la variance $\sigma^2_k$ est remplacée par la valeur $\rho_{n,k}=A_{n,k}/\sigma^2_k$. Il est également possible de tenir compte d'autres informations représentatives des brouilleurs, soit en remplacement, soit en complément.

Le module d'estimation 3 délivre l'estimation de la variation de phase $\delta_n$, qui peut être utilisée pour diverses opérations, et notamment pour contrôler le CAF 6.

Cette information $\delta_n$ tient compte, selon l'invention, d'un pondération fonction de la confiance que l'on peut attribuer à chaque porteuse, du fait des brouilleurs détectés. Dans le cas où le module 5 délivre l'information $\sigma^2_k$, le module d'estimation peut donc calcusler :

$$\delta_n = \text{Arg}\left\{\sum_{k \in C}\left[\frac{1}{\sigma_k^2}(R_{n,k}.P^*_{n,k})(R_{n-1,k}.P^*_{n-1,k})^*\right]\right\} \qquad (3)$$

Selon une version simplifiée, on peut se contenter d'une pondération plus expéditive, mais nettement plus simple :

$$\delta_n = \text{Arg}\left\{\sum_{k \in C}\left[I(\sigma_k)(R_{n,k}.P^*_{n,k})(R_{n-1,k}.P^*_{n-1,k})^*\right]\right\} \qquad (5)$$

Où $I(\sigma_k)$ vaut 1 tant que $\sigma_k$ est en dessous d'un certain seuil S, et 0 lorsque $\sigma_k$ dépasse S. Dans une mise en oeuvre matérielle, le bloc chargé d'estimer $\sigma_k$ délivre un signal de contrôle lorsque $\sigma_k$ dépasse S. Le module 3 chargé de calculer la somme (4) inhibe la prise en compte du terme courant sur réception de ce signal.

Si le récepteur calcule $\rho_{n,k}=A_{n,k}/\sigma^2_k$ au lieu de $\sigma^2_k$, le calcul devient :

$$\delta_n = \mathrm{Arg}\left\{\sum_{k \in C}\left[\rho_{n,k}(R_{n,k}.P^*_{n,k})(R_{n-1,k}.P^*_{n-1,k})^*\right]\right\} \qquad (4)$$

Dans la version simplifiée, on a alors :

$$\delta_n = \mathrm{Arg}\left\{\sum_{k \in C}\left[J(\rho_{n,k})(R_{n,k}.P^*_{n,k})(R_{n-1,k}.P^*_{n-1,k})^*\right]\right\} \qquad (6)$$

où $J(\rho_{n,k})$ vaut 1 tant que $\rho_{n,k}$ est au dessus d'un certain seuil S, et 0 lorsque $\rho_{n,k}$ est inférieur à S. Dans une mise en oeuvre matérielle, le bloc chargé d'estimer $\rho_{n,k}$ délivre un signal de contrôle lorsque $\rho_{n,k}$ devient inférieur à S. Le module 3 chargé de calculer la somme (6) inhibe la prise en compte du terme courant sur réception de ce signal.

## Revendications

1. Procédé d'estimation d'un décalage de phase parasite lors de la réception d'un signal multiporteuse formé d'une succession temporelle de symboles modulant une pluralité de fréquences porteuses, au moins certaines desdites fréquences porteuses d'au moins certains desdits symboles portant des éléments de référence, dont la valeur à l'émission est connue du récepteur effectuant ladite réception,
procédé du type comprenant une étape (3) d'estimation de la variation de phase $\delta_n$ entre au moins deux symboles portant des éléments de référence, par analyse desdits éléments de référence,
**caractérisé en ce que** la contribution ($R_{n,k}$) d'au moins certains desdits éléments de référence dans ladite estimation (3) est pondérée par une information ($\sigma^2_k$) représentative du bruit affectant la fréquence porteuse portant ledit élément de référence.

2. Procédé selon la revendication 1, **caractérisé en ce que** ladite information représentative du bruit appartient au groupe comprenant :

   - la variance (5) du bruit affectant chaque fréquence porteuse ($\sigma^2_k$) ;
   - l'amplitude du produit $R_{n,k}.R_{n-i,k}$, $R_{n,k}$, $R_{n-i,k}$ étant les valeurs des éléments de référence tel que reçu ;
   - le taux d'erreur affectant chaque fréquence porteuse ;
   - une information externe indiquant que la porteuse n'est pas fiable.

3. Procédé selon la revendication 2, **caractérisé en ce que** ladite information représentative du bruit est une estimation (5) de la variance du bruit, et **en ce que** l'estimation de la variation de phase $\delta_n$ est calculée de la façon suivante :

$$\delta_n = \mathrm{Arg}\left\{\sum_{k \in C}\left[\frac{1}{\sigma^2_k}(R_{n,k}.P^*_{n,k})(R_{n-1,k}.P^*_{n-1,k})^*\right]\right\}$$

   où :

   $P_{n,k}$ est la valeur de l'élément de référence tel qu'émis ;
   $R_{n,k}$ est la valeur de l'élément de référence tel que reçu ;
   n représente la dimension temporelle ;
   k représente la dimension fréquentielle ;
   C étant l'ensemble des fréquences porteuses portant des éléments de référence.

4. Procédé selon la revendication 2, **caractérisé en ce que** ladite information représentative du bruit est une estimation de $\rho_{n,k} = A_{n,k}/\sigma^2_k$, $\sigma^2_k$ étant une estimation de la variance du bruit et $A_{n,k}$ étant une estimation du module carré de la réponse fréquentielle du canal sur la fréquence porteuse k à l'instant n, et **en ce que** l'estimation de

la variation de phase $\delta_n$ est calculée de la façon suivante :

$$\delta_n = \text{Arg}\left\{\sum_{k \in C}\left[\rho_{n,k}(R_{n,k}.P^*_{n,k})(R_{n-1,k}.P^*_{n-1,k})^*\right]\right\}$$

où:

- $P_{n,k}$ est la valeur de l'élément de référence tel qu'émis ;
- $R_{n,k}$ est la valeur de l'élément de référence tel que reçu ;
- n représente la dimension temporelle ;
- k représente la dimension fréquentielle ;
- C étant l'ensemble des fréquences porteuses portant des éléments de référence.

**5.** Procédé selon l'une quelconque des revendications 1 à 4, **caractérisé en ce que** ladite pondération consiste en un seuillage, seuls les éléments de référence portés par des fréquences porteuses pour lesquelles ladite information représentative du bruit dépasse un seuil prédéterminé étant prises en compte.

**6.** Procédé selon la revendication 5, **caractérisé en ce que** ladite information représentative du bruit est une estimation de la variance du bruit, et **en ce que** l'estimation de la variation de phase $\delta_n$ est calculée de la façon suivante :

$$\delta_n = \text{Arg}\left\{\sum_{k \in C}\left[I(\sigma_k)(R_{n,k}.P^*_{n,k})(R_{n-1,k}.P^*_{n-1,k})^*\right]\right\}$$

où :

- $I(\sigma_k)$ vaut 1 tant que $\sigma_k$ est en dessous dudit seuil, et 0 sinon ;
- $P_{n,k}$ est la valeur de l'élément de référence tel qu'émis ;
- $R_{n,k}$ est la valeur de l'élément de référence tel que reçu ;
- n représente la dimension temporelle ;
- k représente la dimension fréquentielle ;
- C étant l'ensemble des fréquences porteuses portant des éléments de référence.

**7.** Procédé selon la revendication 5, **caractérisé en ce que** ladite information représentative du bruit est une estimation de $\rho_{n,k} = A_{n,k}/\sigma^2_k$, $\sigma^2_k$ étant une estimation de la variance du bruit et $A_{n,k}$ étant une estimation de l'amplitude carrée de la réponse fréquentielle du canal sur la fréquence porteuse k à l'instant n, et **en ce que** l'estimation de la variation de phase $\delta_n$ est calculée de la façon suivante :

$$\delta_n = \text{Arg}\left\{\sum_{k \in C}\left[J(\rho_{n,k})(R_{n,k}.P^*_{n,k})(R_{n-1,k}.P^*_{n-1,k})^*\right]\right\}$$

où:

- $J(\rho_{n,k})$ vaut 1 tant que $\rho_k$ est au dessus dudit seuil, et 0 sinon ;
- $P_{n,k}$ est la valeur de l'élément de référence tel qu'émis ;
- $R_{n,k}$ est la valeur de l'élément de référence tel que reçu ;
- n représente la dimension temporelle ;
- k représente la dimension fréquentielle ;
- C étant l'ensemble des fréquences porteuses portant des éléments de référence.

**8.** Récepteur d'un signal multiporteuse formé d'une succession temporelle de symboles modulant une pluralité de fréquences porteuses, au moins certaines desdites fréquences porteuses d'au moins certains desdits symboles

portant des éléments de référence, dont la valeur à l'émission est connue du récepteur,
du type comprenant des moyens d'estimation (3) de la variation de phase $\delta_n$ entre au moins deux symboles portant des éléments de référence, par analyse desdits éléments de référence,
**caractérisé en ce que** lesdits moyens d'estimation (3) pondèrent la contribution de chacun desdits éléments de référence dans ladite estimation par une information ($\sigma^2_k$) représentative du bruit affectant la fréquence porteuse portant ledit élément de référence.

**9.** Récepteur selon la revendication 8, **caractérisé en ce que** ladite information représentative du bruit est une estimation de la variance du bruit affectant chaque fréquence porteuse ($\sigma^2_k$).

## Claims

**1.** Process for estimating a parasite phase shift on reception of a multi-carrier signal formed by a time sequence of symbols modulating a plurality of carrier frequencies, at least some of the said carrier frequencies for at least some of the said symbols carrying reference elements, for which the values on transmission are known to the receiver that receives them,
this process being of the type comprising a step (3) in which the phase variation $\delta_n$ between at least two symbols carrying the reference elements is estimated, by analysis of the said reference elements,
**characterised in that** the contribution ($R_{n,k}$) of at least some of the said reference elements in the said estimate (3) is weighted by information ($\sigma^2_k$) representative of the noise affecting the carrier frequency carrying the said reference element.

**2.** Process according to claim 1, **characterised in that** the said information representative of the noise belongs to the group comprising:

- the variance (5) of the noise affecting each carrier frequency ($\sigma^2_k$) ;
- the amplitude of the product $R_{n,k}.R_{n-i,k}$, $R_{n,k}$, $R_{n-i,k}$ being the values of the reference elements as received;
- the error rate affecting each carrier frequency;
- an external information indicating that the carrier is not reliable.

**3.** Process according to claim 2, **characterised in that** the said information representative of the noise is an estimate (5) of the noise variance, and the estimate of the phase variation $\delta_n$ is calculated as follows:

$$\delta_n = \text{Arg}\left\{\sum_{k\in C}\left[\frac{1}{\sigma_k^2}(R_{n,k}.P^*_{n,k})(R_{n-1,k}.P^*_{n-1,k})^*\right]\right\}$$

where:

$P_{n,k}$ is the value of the reference element as it was emitted;
$R_{n,k}$ is the value of the reference element as it was received;
n is the time dimension;
k is the frequency dimension;
C is the set of carrier frequencies carrying reference elements.

**4.** Process according to claim 2, **characterised in that** the said information representative of the noise is an estimate of $\rho_{n,k} = A_{n,k}/\sigma^2_k$ where $\sigma^2_k$ is an estimate of the noise variance and $A_{n,k}$ is an estimate of the modulus of the square of the frequency response of the channel on carrier frequency k at instant n, and **in that** the estimate of the phase variation $\delta_n$ is calculated as follows:

$$\delta_n = \text{Arg}\left\{\sum_{k\in C}\left[\rho_{n,k}(R_{n,k}.P^*_{n,k})(R_{n-1,k}.P^*_{n-1,k})^*\right]\right\}$$

where:

$P_{n,k}$ is the value of the reference element as it was emitted;
$R_{n,k}$ is the value of the reference element as it was received;
n is the time dimension;
k is the frequency dimension;
C is the set of carrier frequencies carrying reference elements.

5. Process according to any one of claims 1 to 4, **characterised in that** the said weighting consists of thresholding, and only the reference elements carried by carrier frequencies for which the said information representative of the noise exceeds a predetermined threshold are taken into account.

6. Process according to claim 5, **characterised in that** the said information representative of the noise is an estimate of the noise variance, and **in that** the estimate of the phase variation $\delta_n$ is calculated as follows:

$$\delta_n = \operatorname{Arg}\left\{\sum_{k \in C}\left[I(\sigma_k)(R_{n,k}.P^*_{n,k})(R_{n-1,k}.P^*_{n-1,k})^*\right]\right\}$$

where:

$I(\sigma_k)$ is equal to 1 provided that $\sigma_k$ is below the said threshold, and is otherwise equal to 0.
$P_{n,k}$ is the value of the reference element as it was emitted;
$R_{n,k}$ is the value of the reference element as it was received;
n is the time dimension;
k is the frequency dimension;
C is the set of carrier frequencies carrying reference elements.

7. Process according to claim 5, **characterised in that** the said information representative of the noise is an estimate of $\rho_{n,k} = A_{n,k}/\sigma^2_k$, where $\sigma^2_k$ is an estimate of the noise variance and $A_{n,k}$ is an estimate of the amplitude of the square of the frequency response of the channel on carrier frequency k at instant n, and **in that** the estimate of the phase variation $\delta_n$ is calculated as follows:

$$\delta_n = \operatorname{Arg}\left\{\sum_{k \in C}\left[J(\rho_{n,k})(R_{n,k}.P^*_{n,k})(R_{n-1,k}.P^*_{n-1,k})^*\right]\right\}$$

where:

$J(\rho_{n,k})$ is equal to 1 provided that $\rho_k$ is above the said threshold, and is otherwise equal to 0
$P_{n,k}$ is the value of the reference element as it was emitted;

$R_{n,k}$ is the value of the reference element as it was received;
n is the time dimension;
k is the frequency dimension;
C is the set of carrier frequencies carrying reference elements.

8. Receiver of a multi-carrier signal formed by a time sequence of symbols modulating a plurality of carrier frequencies, at least some of the said carrier frequencies for at least some of the said symbols carrying reference elements, for which the values on transmission are known to the receiver,
of the type comprising means (3) of estimating the phase variation $\delta_n$ between at least two symbols carrying the reference elements, by analysis of the said reference elements,
**characterised in that** the said estimating means (3) weight the contribution of each of the said reference elements in the said estimate by information ($\sigma^2_k$) representative of the noise affecting the carrier frequency carrying the

said reference element.

**9.** Receiver according to claim 8, **characterised in that** the said information representative of the noise is an estimate of the noise variance affecting each carrier frequency ($\sigma^2_k$).

**Patentansprüche**

**1.** Verfahren zum Schätzen einer Störphasenverschiebung beim Empfang eines Mehrträgersignals, das aus einer zeitlichen Folge von Symbolen gebildet wird, die eine Vielzahl von Trägerfrequenzen modulieren, wobei zumindest einige dieser Trägerfrequenzen für mindestens einige der erwähnten Symbole Referenzelemente tragen, deren Werte beim Senden vom Empfänger bekannt sind,
wobei es sich um ein Verfahren von der Art handelt, das einen Schritt umfasst, bei dem die Phasenvariierung $\delta_n$ zwischen zumindest zwei die Referenzelemente tragenden Symbole mittels der Analyse dieser Referenzelemente geschätzt wird,
**dadurch gekennzeichnet**, das der Beitrag von mindestens einigen der erwähnten Referenzelementen durch eine für das Rauschen repräsentative Information gewichtet wird, welches die das erwähnte Referenzelement tragende Trägerfrequenz betrifft.

**2.** Verfahren nach Anspruch 1, **dadurch gekennzeichnet**, das die für das Rauschen repräsentative Information zur Gruppe gehört, die folgendes umfasst:

- die Varianz des eine jede Trägerfrequenz ($\sigma^2_k$) betreffenden Rauschens;
- die Amplitude des Produktes $R_{n,k} \cdot R_{n-i,k}$, wobei $R_{n,k}$, $R_{n-i,k}$ die Werte der Referenzelemente beim Empfang darstellen;
- die eine jede Trägerfrequenz betreffende Fehlerrate;
- eine äußere Information, die angibt, dass der Träger unzuverlässig ist.

**3.** Verfahren nach Anspruch 2, **dadurch gekennzeichnet, dass** die erwähnte für das Rauschen repräsentative Information eine Schätzung der Varianz dieses Rauschens ist und, dass die Schätzung der Phasenvariation $\delta_n$ folgendermaßen berechnet wird:

$$\delta_n = \mathrm{Arg}\left\{\sum_{k \varepsilon C}\left[\frac{1}{\sigma_k^2}(R_{n,k} \cdot P^*_{n,k})(R_{n-1,k} \cdot P^*_{n-1,k})^*\right]\right\}$$

wobei

$P_{n,k}$ der Wert des Referenzelementes beim Senden ist;
$R_{n,k}$ der Wert des Referenzelements beim Empfang ist;
n die Zeitgröße ist;
k die Frequenzgröße ist;
C der Satz der die Referenzelemente tragenden Trägerfrequenzen ist.

**4.** Verfahren nach Anspruch 2, **dadurch gekennzeichnet, dass** die für das Rauschen repräsentative Information eine Schätzung für $\rho_{n,k} = A_{n,k}/\sigma^2_k$ ist, wobei $\sigma^2_k$ eine Schätzung der Varianz des Rauschens, und $A_{n,k}$ eine Schätzung des Betragsquadrates der Frequenzantwort des Kanals bei der Trägerfrequenz k zum Zeitpunkt n ist und, dass die Schätzung der Phasenvariation $\delta_n$ folgendermaßen berechnet wird:

$$\delta_n = \mathrm{Arg}\left\{\sum_{k \varepsilon C}\left[\rho_{n,k}(R_{n,k} \cdot P^*_{n,k})(R_{n-1,k} \cdot P^*_{n-1,k})^*\right]\right\}$$

wobei

$P_{n,k}$ der Wert des Referenzelementes beim Senden ist;
$R_{n,k}$ der Wert des Referenzelements beim Empfang ist;
n die Zeitgröße ist;
k die Frequenzgröße ist;
C der Satz der die Referenzelemente tragenden Trägerfrequenzen ist.

**5.** Verfahren nach einem der Ansprüche 1 bis 4, **dadurch gekennzeichnet, dass** die erwähnte Wichtung im Bilden eines Schwellenwertes besteht und, dass nur die Referenzelemente berücksichtigt werden, die von Trägerfrequenzen getragen werden, für welche die für das Rauschen repräsentative Information größer als ein vorgegebener Schwellenwert ist.

**6.** Verfahren nach Anspruch 5, **dadurch gekennzeichnet, dass** die für das Rauschen repräsentative Information eine Schätzung der Varianz des Rauschens ist und, dass die Schätzung der Phasenvariation $\delta_n$ folgendermaßen berechnet wird:

$$\delta_n = \mathrm{Arg}\left\{\sum_{k \varepsilon C}\left[I(\sigma_k)(R_{n,k} \cdot P^*_{n,k})(R_{n-1,k} \cdot P^*_{n-1,k})^*\right]\right\}$$

wobei

$I(\sigma_k)$ gleich 1 ist, wenn $\sigma_k$ unterhalb des erwähnten Schwellenwertes liegt und andernfalls gleich 0 ist;
$P_{n,k}$ der Wert des Referenzelementes beim Senden ist;
$R_{n,k}$ der Wert des Referenzelements beim Empfang ist;
n die Zeitgröße ist;
k die Frequenzgröße ist;
C der Satz der die Referenzelemente tragenden Trägerfrequenzen ist.

**7.** Verfahren nach Anspruch 5, **dadurch gekennzeichnet, dass** die für das Rauschen repräsentative Information eine Schätzung für $\rho_{n,k} = A_{n,k}/\sigma^2_k$ ist, wobei $\sigma^2_k$ eine Schätzung der Varianz des Rauschens und $A_{n,k}$ eine Schätzung des Betragsquadrates der Frequenzantwort des Kanals bei der Trägerfrequenz k zum Zeitpunkt n ist, und dass die Schätzung der Phasenvariation $\delta_n$ folgendermaßen berechnet wird:

$$\delta_n = \mathrm{Arg}\left\{\sum_{k \varepsilon C}\left[J(\rho_{n,k})(R_{n,k} \cdot P^*_{n,k})(R_{n-1,k} \cdot P^*_{n-1,k})^*\right]\right\}$$

wobei

i $J(\rho_{n,k})$ gleich 1 ist, wenn $\rho_k$ unterhalb des erwähnten Schwellenwertes liegt und andernfalls gleich 0 ist;
$P_{n,k}$ der Wert des Referenzelementes beim Senden ist;
$R_{n,k}$ der Wert des Referenzelements beim Empfang ist;
n die Zeitgröße ist;
k die Frequenzgröße ist;
C der Satz der die Referenzelemente tragenden Trägerfrequenzen ist.

**8.** Empfänger eines Mehrträgersignals, das aus einer zeitlichen Folge von Symbolen gebildet wird, die eine Vielzahl von Trägerfrequenzen modulieren, wobei zumindest einige dieser Trägerfrequenzen für mindestens einige der erwähnten Symbole Referenzelemente tragen, deren Werte beim Senden vom Empfänger bekannt sind,
von der Art, die Mittel zum Schätzen der Phasenvariierung $\delta_n$ zwischen zumindest zwei die Referenzelemente tragenden Symbole mittels der Analyse dieser Referenzelemente umfasst,
**dadurch gekennzeichnet**, das die erwähnten Mittel zum Schätzen den Beitrag eines jeden der erwähnten Referenzelemente innerhalb der Schätzung durch Information wichten, die für das Rauschen repräsentativ ist, welches die das Referenzelement tragende Trägerfrequenz betrifft.

9. Empfänger nach Anspruch 8, **dadurch gekennzeichnet, dass** die für das Rauschen repräsentative Information eine Schätzung der Varianz des Rauschens ist, das jede Trägerfrequenz ($\sigma^2_k$) betrifft.

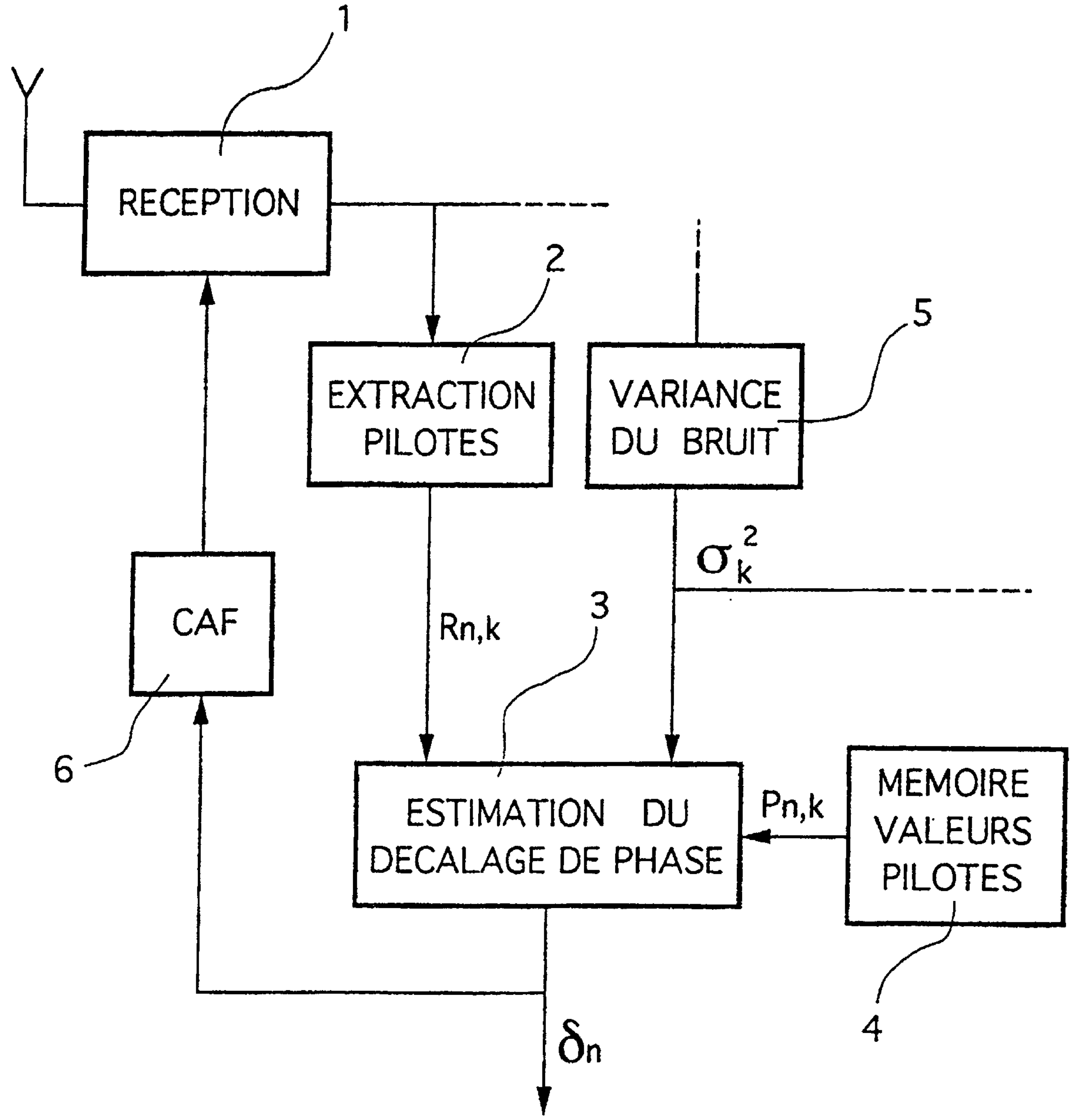
1
RECEPTION
2
EXTRACTION PILOTES
5
VARIANCE DU BRUIT
$\sigma_k^2$
Rn,k
3
CAF
6
ESTIMATION DU DECALAGE DE PHASE
Pn,k
MEMOIRE VALEURS PILOTES
4
$\delta_n$

Fig. unique